# EUROPEAN PATENT APPLICATION

(11) **EP 4 640 066 A1**
(43) Date of publication of application: **29.10.2025**
(21) Application number: 23907134.3
(22) Date of filing: 21.12.2023
(51) Int. Cl.: A23G 3/34, A21D 2/16, A21D 2/18, A21D 2/26, A21D 2/34, A21D 2/36, A21D 2/38, A21D 8/02, A21D 8/06, A21D 10/00, A21D 13/02, A21D 13/04, A21D 13/045, A21D 13/047, A21D 13/80, A23G 3/36, A23G 3/40, A23G 3/42, A23G 3/44, A23G 3/48, A23G 3/50

(54) **BAKED CONFECTIONS AND METHOD FOR PRODUCING SAME**

(30) Priority: 21.12.2022 JP 2022204823
(71) Applicant: Ezaki Glico Co., Ltd., Osaka-shi Osaka 555-8502 (JP)
(72) Inventor: TOMIOKA, Eisuke, Osaka-shi, Osaka 555-8502 (JP); TOYOSHIMA, Ryohei, Osaka-shi, Osaka 555-8502 (JP)
(74) Representative: Hoffmann Eitle
(86) International application number: PCT/JP2023/045881
(87) International publication number: WO 2024/135774

(57) **Abstract**

An object to be achieved by the present invention is to increase the degree of gelatinization of a baked confection and improve the melting mouthfeel. The present invention provides a method for producing a baked confection, the method including a baking step of jetting moist hot air at 150 to 350°C, which is a mixture of heated air at 150 to 350°C and steam at 100 to 350°C, onto confectionery dough.

## Description

### Technical Field

The present invention relates to a baked confection and a method for producing the same.

### Background Art

Baked confections, made by mixing an ingredient such as water with wheat flour, rice flour, or other flour and baking the mixture, are popular all over the world in various forms such as biscuits, cookies, Japanese rice crackers, and arare. Therefore, attempts have been continued to improve the texture and flavor of baked confections.

For example, PTL 1 describes a method for producing a rod-shaped baked confection, including the steps of: molding dough containing 35 wt% or more of strong flour, into a rod shape, degassing the dough under reduced pressure before or after the molding step; and baking the resulting degassed molded dough. By such a method, it is possible to provide a rod-shaped baked confection which improves the powdery texture and flavor of the baked confection with a crispy, hard, crunchy texture and flavor, and a method for producing the rod-shaped baked confection. However, while such a method brings about a crispy, hard, and crunchy texture as described above, baked confections are greatly desired to have improved melting mouthfeel in the mouth, and improvement thereof is thus strongly required.

### Citation List

### Patent Literature

PTL 1: JP2010-142177A
PTL 2: WO2017/014234A
PTL **3:** JP6650433B2
PTL **4:** JP6810543B2
PTL 5: JP2022-047226A
PTL **6:** JP2009-232701A
PTL 7: JP2008-220216A
PTL 8: JPS53-099359A
PTL **9:** JPS55-039764A

### Non-patent Literature

NPL 1: Zenkoku Beika Industrial Association website "Arare/osenbei ga dekirumade (How Arare and Senbei are Made)" (https://www.arare-osenbei.jp/make/)

### Summary of Invention

### Technical Problem

An object to be achieved by the present invention is to increase the degree of gelatinization of a baked confection and improve the texture such as melting mouthfeel.

### Solution to Problem

Under such circumstances, the present inventors have conducted studies on various production methods and finally found that a baking step of jetting moist hot air at 150 to 350°C, which is a mixture of heated air at 150 to 350°C and steam at 100 to 350°C, onto confectionery dough may be performed to increase the degree of gelatinization of a baked confection and improve the melting mouthfeel. The present invention is based on such novel findings. The present inventors have further conducted extensive trial and error on the type of powder to be blended in the confectionery dough, the shape of the confectionery dough to be subjected to the baking step, and the like, and have completed the present invention. Accordingly, in typical embodiments, the present invention provides the following items:
Item 1. A method for producing a baked confection, the method including a baking step of jetting moist hot air at 150 to 350°C, which is a mixture of heated air at 150 to 350°C and steam at 100 to 350°C, onto confectionery dough.
Item 2. The method according to item 1, wherein in the baking step, the moist hot air is jetted at 1 to 13 m/s.
Item 3. The method according to item 1 or 2, wherein the moist hot air is jetted in the baking step for 1 to 10 minutes.
Item 4. The method according to any one of items 1 to 3, wherein the confectionery dough contains 20 to 100 mass% of at least one grain or grain powder selected from the group consisting of whole grain flour, barley flour, brown rice flour, rye flour, oat flour, adlay flour, sorghum flour, buckwheat seed flour, amaranthus, quinoa, black sesame, white sesame, wheat bran, and rice bran in blending ingredients.
Item 5. The method according to any one of items 1 to 3, wherein the confectionery dough contains 5 to 50 mass% of at least one selected from the group consisting of whole grain flour, barley flour, brown rice flour, rye flour, oat flour, adlay flour, sorghum flour, buckwheat seed flour, amaranthus, quinoa, black sesame, white sesame, wheat bran, rice bran, soybean flour, pea flour, wheat protein, insect powder, algal protein, cheese, cheese powder, soybean protein, rice protein, inulin, indigestible dextrin, and phosphated distarch phosphate in blending ingredients.
Item 6. The method according to any one of items 1 to 5, wherein
   the confectionery dough contains rice flour,
   the method further including the steps of:
      extruding and molding the confectionery dough into a substantially rectangular flat plate shape or a rod shape before the baking step; and
      making a cut in the confectionery dough obtained by extruding and molding.
Item 7. The method according to item 6, wherein in the step of making a cut in the confectionery dough, an interval between cuts is 2 to 25 cm.
Item 8. The method according to item 6 or 7, wherein the confectionery dough further contains at least one material selected from the group consisting of starch, active gluten, maltose, trehalose, sugar alcohol, and vegetable fat and oil, and a content of the material is 15 parts by mass or less of cold water gelatinized starch, 20 parts by mass or less of maltose, 20 parts by mass or less of trehalose, and 30 parts by mass or less of vegetable fat and oil with respect to 100 parts by mass of rice flour.
Item 9. A baked confection obtained by the method according to any one of items 1 to 8.
Item 10. The baked confection according to item 9, which is a rod-shaped baked confection.
Item 11. A rod-shaped rice cracker having a degree of gelatinization of 70% or more.
Item 12. The rod-shaped rice cracker according to item 11, which has a blister on a surface thereof.
Item 13. The rod-shaped rice cracker according to item 11 or 12, which is obtained by the method according to any one of items 1 to 8.
Item 14. The rod-shaped rice cracker according to item 11 or 12, wherein dough containing rice flour and at least one material selected from the group consisting of starch, active gluten, maltose, trehalose, sugar alcohol, and vegetable fat and oil is baked by jetting moist hot air at 150 to 350°C, which is a mixture of heated air at 150 to 350°C and steam at 100 to 350°C, resulting in gelatinization and/or surface blistering.

### Advantageous Effects of Invention

According to the present invention, it is possible to provide a baked confection having an increased degree of gelatinization and improved texture such as melting mouthfeel. In the present invention, the melting mouthfeel of the baked confection means ease of dissolution by saliva, smooth texture or feeling on the tongue without roughness or powdery texture. In a preferred embodiment, the present invention can improve not only melting mouthfeel but also a stuck texture (improvement of a crispy texture), and reduce a crunchy, too-hard texture, or the like. In a preferred embodiment, the present invention can provide a baked confection further improved in texture.

### Brief Description of Drawings

Fig. 1 shows photographs of cross sections of confectionery of a test group and a control group in Example 2. The left photograph shows a test group, and the right photograph shows a target group.
Fig. 2 shows a photograph of the appearance of stick-shaped rice crackers of each test group in Example 4.
Fig. 3 shows the measurement results of the degree of gelatinization (degree of pregelatinization) of test groups and a conventional rice cracker in Example 4.
Fig. 4 shows the results of sensory evaluation of a test group (JET) and a target group (batch) in Example 5.
Fig. 5 shows the results of sensory evaluation of a test group (JET) and a target group (batch) in Example **6.**
Fig. 6 shows the results of sensory evaluation of a test group (JET) and a target group (batch) in Example **7.**

### Description of Embodiments

### Method for producing baked confection

In an embodiment, the present invention provides a method for producing a baked confection, the method including a baking step of jetting moist hot air at 150 to 350°C, which is a mixture of heated air at 150 to 350°C and steam at 100 to 350°C, onto confectionery dough. The moist hot air described in the present application is a mixture of heated air and steam and does not necessarily refer to moist air.

In the present invention, the baked confection refers to a confection obtained by baking dough. The dough refers to a lump product obtained by mixing a blending ingredient and water. In the present specification, the blending ingredient refers to a raw material other than water. Therefore, in the present specification, the blending ingredient may be described as "raw material other than water".

Examples of the baked confection include, but are not particularly limited to, cookies, biscuits (soft biscuits, hard biscuits, etc.), shortbread cookies, crackers, wafers, Japanese rice crackers, thin slices of dried rice cake, arare, and chips. In the present invention, a moisture content is preferably 30 mass% or less, more preferably 20 mass% or less, more preferably 10 mass% or less, more preferably 5 mass% or less, and still more preferably 3 mass% or less so as to obtain a crunchy and crispy texture with good melting mouthfeel. The moisture content can be measured by a heating/drying/mass measurement method or the like. The lower limit of the moisture content is also not particularly limited, and examples thereof include 0.1 mass% or more, 1 mass% or more, 3 mass% or more, and 5 mass% or more.

Examples of the shape of the baked confection include, but are not particularly limited to, a flat plate shape, such as roughly round, roughly oval, or polygonal (triangle, quadrangle, pentagon, hexagon, star, etc.), a rod shape, a noodle shape, a granular shape, and a ribbon shape. In the present invention, these structures also include a structure having bubbles or spaces on the surface or inside. Further, in the present invention, the "flat plate shape" includes a flat plate-like shape as a whole, and to that extent also includes a picket hole, a hole as a design, a hole such as a pore, or a pore; and a streak as a design.

The rod-shaped baked confection includes a hollow rod and a solid rod. In the present invention, the hollow rod means a rod structure having a through hole in the longitudinal axis direction. The solid rod means a rod structure having no through hole in the longitudinal axis direction, regardless of whether it is open or closed at each end. In the present invention, the range of the term "hollow rod" also includes a structure having bubbles on the surface or inside as long as the above definition is satisfied. Similarly, the range of the term "solid rod" also includes a structure having bubbles on the surface or inside as long as the above definition is satisfied.

The method of the present invention includes a baking step of jetting moist hot air at 150 to 350°C, which is a mixture of heated air at 150 to 350°C and steam at 100 to 350°C, onto confectionery dough. In a typical embodiment, the confectionery dough is obtained by mixing water and raw materials (blending ingredients) other than water. Typically, the baked confection of the present invention contains cereal flour and/or starch in the blending ingredients. Examples of the cereal flour include, but are not particularly limited to, rice flour, wheat flour (weak flour, strong flour, etc.), barley flour, rye flour, potato flour, and corn flour. When rice flour is used as the cereal flour, any rice flour can be used as the rice flour as long as it is usually commercially available, and examples thereof include rice flour using non-glutinous rice as a raw material (shinko, joshinko, joyoko, etc.) and rice flour using glutinous rice as a raw material (mochiko, shiratamako, domyojiko, kanbai powder, jonanko, etc.). Even when wheat flour is used as cereals, any wheat flour can be used as long as it is usually commercially available, and for example, any of strong flour, semi-strong flour, medium flour, and weak flour may be used. Even when barley flour is used as cereals, any barley flour can be used as long as it is normally commercially available, and examples thereof include flour made from barley and naked barley, which are appropriately polished and then milled. When rye flour is used as cereals, any rye flour can be used as long as it is usually commercially available, and examples thereof include fine grinding, coarse grinding, and whole grain rye flour. Even when potato flour is used as cereals, any potato flour can be used as long as it is usually commercially available, and examples of the type of potato include white potato, sweet potato, and purple potato, and examples of the shape include powder and flakes. Even when corn flour is used as cereals, any corn flour can be used as long as it is usually commercially available, and examples thereof include corn grits, cornmeal, and corn powder. These cereal flour may be used singly or in combination with two or more thereof.

As the starch, any commercially available starch can be used, and the starch is not particularly limited, but for example, potato starch, tapioca starch, waxy corn starch, glutinous rice starch/rice starch, sweet potato starch, wheat starch, and arrowroot starch can be used. These starches may be used as they are or may be used after processing. Examples of the processing method include an esterification treatment, an etherification treatment, a crosslinking treatment, an acid treatment, an oxidation treatment, a wet heat treatment, and a combination thereof. These modified and unmodified starches can be used alone or in combination.

In such an embodiment, the lower limit of the proportion of the total amount of the cereal flour and starch to the total amount of the blending ingredients is not limited, but is, for example, preferably 30 mass% or more, more preferably 40 mass% or more, more preferably 50 mass% or more, more preferably 55 mass% or more, and still more preferably 60 mass% or more. In such an embodiment, the upper limit of the proportion of the total amount of the cereal flour and starch to the total amount of the blending ingredients is also not limited, but is, for example, preferably 95 mass% or less, more preferably 90 mass% or less, more preferably 85 mass% or less, more preferably 80 mass% or less, and still more preferably 75 mass% or less.

The blending ingredients of the dough may further contain a taste raw material, active gluten, an emulsifier, and the like. The ingredients that may be blended in the dough are not limited as long as the effect of the present invention is obtained, and in addition to the above ingredients, saccharides such as sugar, isomerized sugar, trehalose, palatinose, sugar alcohol, and a sweetener (acesulfame potassium, sucralose, etc.), edible fats and oils such as shortening, margarine, butter, lard, corn oil, olive oil, cottonseed oil, rapeseed oil, soybean oil, coconut oil, sesame oil, sunflower oil, safflower oil, salad oil, and powdered fat and oil, salt, dairy products, egg products, yeast, enzymes, and leavening agents such as baking soda, seasonings, and the like may be blended. These ingredients may be used singly or in combination with two or more thereof.

When the taste raw material is used, examples the taste raw material include, but are not particularly limited to, cocoa powder, nut powder, wheat bran, coffee, green tea, black tea, and a fruit raw material.

When the fruit raw material is used, examples of the fruit raw material include, but are not particularly limited to, concentrated fruit juice, fruit juice, reduced fruit juice, peel, puree, and dried fruit. When a fruit is used, examples of the fruit include, but are not particularly limited to, orange, citrus unshiu, grapefruit, apple, grape, pineapple, peach, summer orange, hassaku, citrus iyo, ponkan, shekwasha, pear, European pear, persimmon, peach, apricot, cranberry, banana, papaya, kiwi fruit, guava, passion fruit, strawberry, watermelon, loquat, muscat, fig, lemon, lime, Japanese apricot, pea, kabosu, and melon.

The method of the present invention includes performing the step of jetting moist hot air, which is a mixture of heated air and steam, onto the confectionery dough to bake the confectionery dough. The lower limit of the temperature of the heated air is 150°C or higher, preferably 160°C or higher, and more preferably 165°C or higher. The upper limit of the temperature of the heated air is 350°C or lower, preferably 270°C or lower, more preferably 250°C or lower, more preferably 240°C or lower, still more preferably 235°C or lower. The temperature of the steam is 350°C or lower, preferably 250°C or lower, more preferably 200°C or lower, more preferably 150°C or lower, more preferably 130°C or lower, and still more preferably 110°C or lower. The lower limit of the temperature of steam may be any temperature at which steam can be generated according to the atmospheric pressure, but is 100°C or higher at normal pressure. In the baking step, the amount of steam contained in the moist hot air after mixing the heated air and the steam is not limited, but is, for example, preferably 5 g/cubic meter or more, more preferably 10 g/cubic meter or more, more preferably 15 g/cubic meter or more, still more preferably 20 g/cubic meter or more. In the baking step, the upper limit of the amount of steam contained in the moist hot air is not limited, but is, for example, preferably 100 g/cubic meter or less, more preferably 80 g/cubic meter or less, more preferably 70 g/cubic meter or less, still more preferably 60 g/cubic meter or less. In the present invention, it is preferable to mix the heated air and the steam so that the amount of steam contained in the moist hot air falls within the above range. The lower limit of the temperature of the moist hot air is 150°C or higher, preferably 160°C or higher, and more preferably 170°C or higher. The upper limit of the temperature of the moist hot air is 350°C or lower, preferably 300°C or lower, more preferably 280°C or lower, more preferably 260°C or lower, still more preferably 250°C or lower. In the baking step, the lower limit of the speed at which the moist hot air is jetted is not limited, and for example, the moist hot air is preferably jetted at 1 m/sec or more, more preferably 3 m/sec or more, more preferably 5 m/sec or more, still more preferably 7 m/sec or more. The upper limit of the jet speed of the moist hot air is also not limited, and for example, the moist hot air is preferably jetted at 13 m/s or less, more preferably 11 m/s or less, still more preferably 9 m/s or less. In the baking step, the moist hot air may be jetted to the confectionery dough from one side **(e.g.,** from the upper side of the confectionery dough disposed in the baking apparatus) or may be jetted from both sides **(e.g.,** from both upper and lower sides of the confectionery dough disposed in the baking apparatus) so as to sandwich the confectionery dough. It is preferable to jet from both sides. In these embodiments, the moist hot air is preferably jetted in a direction substantially perpendicular to a plane of a member (iron plate, net, etc.) on which the confectionery dough in the baking apparatus is disposed (from at least one of the upper side and the lower side of the confectionery dough, preferably from both upper and lower sides of the confectionery dough). The term "direction substantially perpendicular" is ordinarily interpreted in the technical field to which the present invention belongs, and is intended to be, for example, a direction having an angle of 20° or less, 10° or less, 5° or less, 3° or less, 1° or less, or the like with respect to a line perpendicular to the plane of the member (iron plate, net, etc.) on which the confectionery dough in the baking apparatus is disposed. Further, the jetted moist hot air may be jetted so as to directly hit the confectionery dough, or the moist hot air may be jetted to an iron plate or the like without directly hitting the confectionery dough to transfer heat to the confectionery dough via the iron plate or the like. In the present invention, the moist hot air from at least one direction is preferably jetted so as to directly hit the confectionery dough. More specifically, for example, the moist hot air may be jetted from the upper and lower sides of the confectionery dough arranged on the iron plate, the moist hot air from the upper side may directly hit the confectionery dough, and the moist hot air from the lower side may indirectly heat the confectionery dough via the iron plate. In addition, for example, the moist hot air may be jetted from both upper and lower sides of the confectionery dough arranged on the net, and the moist hot air from both upper and lower sides may directly hit the confectionery dough. In the baking step, the lower limit of the time for jetting the moist hot air varies depending on the shape, size, and the like of the confectionery dough, and is, for example, preferably 1 minute or more, more preferably 2 minutes or more, more preferably 3 minutes or more, still more preferably 4 minutes or more, although not limited thereto. In the baking step, the upper limit of the time for jetting the moist hot air is also not limited, but is preferably 10 minutes or less, more preferably 9 minutes or less, still more preferably 8 minutes or less. Through the baking step of jetting moist hot air, the degree of gelatinization of a baked confection can be increased as compared with the case of using a conventional oven, and a baked confection with good melting mouthfeel can be obtained.

The baking by the jet of the moist hot air can be performed, for example, by using a jet oven or the like. Conventionally, a jet oven has been used for cooking dishes such as pizza and hamburg steak and known to reduce cooking time. However, a jet oven that jets steam by mixing with heated air has a lower moisture content than hamburg steak, pizza, or the like, and thus has not been conventionally used in the production of baked confections that require further reduction of moisture. In addition, in foods such as hamburg steak and pizza having a relatively high moisture content, the ingredients are not baked to have a crunchy texture like baked confections, and thus the melting mouthfeel is not required. Although the moisture content of an end portion of the pizza is smaller than that of a central portion, the moisture shifts from the central portion to the end portion, and therefore, even the end portion of the pizza does not have a crunchy and hard texture like baked confections. Since the melting mouthfeel in the present invention becomes apparent in a food having a hard texture, the improvement in melting mouthfeel of baked confections as an effect of the present invention cannot be expected from hamburg steak, pizza, or the like using a jet oven.

Subsequently, the method of the present invention will be described in more detail below using some preferred embodiments. In each of the following embodiments, the same types and amounts of raw materials, conditions of the baking step, and the like as those described above can be adopted unless otherwise indicated.

In an embodiment of the present invention, the confectionery dough may contain, in the blending ingredients, at least one grain or grain powder selected from the group consisting of whole grain flour, barley flour, brown rice flour, rye flour, oat flour, adlay flour, sorghum flour, buckwheat seed flour, amaranthus, quinoa, black sesame, white sesame, wheat bran, and rice bran. In such an embodiment, the lower limit of the proportion of the total amount of the grain or grain powder to the total amount of the blending ingredients is not limited, and is, for example, preferably 20 mass% or more, more preferably 30 mass% or more, more preferably 40 mass% or more, and more preferably 50 mass% or more. The upper limit of the proportion of the total amount of the grain or grain powder to the total amount of the blending ingredients is also not limited, and is, for example, preferably 80 mass% or less, more preferably 70 mass% or less, and still more preferably 60 mass% or less. Grain or grain powder such as whole grain flour, barley flour, brown rice flour, rye flour, oat flour, adlay flour, sorghum flour, buckwheat seed flour, amaranthus, quinoa, black sesame, white sesame, wheat bran, and rice bran are called healthy ingredients and are popular foodstuffs in the growing health consciousness. For example, the method described in PTL 3 may be used to obtain a baked confection containing these healthy ingredients in a high content. However, in the conventional method, particularly when these healthy ingredients are contained in a high content, the degree of gelatinization may not be sufficiently increased, resulting in a stuck texture. In the present embodiment, the present invention is effective because the texture of a baked confection can be softened and the melting mouthfeel can be improved even when these healthy ingredients are contained in a high content. In addition, according to the present invention in a preferred embodiment, it is possible to reduce a grain odor, sourness, an off-flavor, and the like.

In another embodiment of the present invention, the confectionery dough may contain, in the blending ingredients, at least one selected from the group consisting of whole grain flour, barley flour, brown rice flour, rye flour, oat flour, adlay flour, sorghum flour, buckwheat seed flour, amaranthus, quinoa, black sesame, white sesame, wheat bran, rice bran, soybean flour, pea flour, wheat protein, insect powder, algal protein, cheese, cheese powder, soybean protein, rice protein, inulin, indigestible dextrin, and phosphated distarch phosphate (such a raw material may be referred to as raw material A in the present invention). In such an embodiment, the lower limit of the proportion of the total amount of the raw material A to the total amount of the blending ingredients is not limited, and is, for example, preferably 5 mass% or more, more preferably 10 mass% or more, more preferably 20 mass% or more, and more preferably 25 mass% or more. The upper limit of the proportion of the total amount of the raw material A to the total amount of the blending ingredients is also not limited, and is, for example, preferably 70 mass% or less, more preferably 60 mass% or less, more preferably 50 mass% or less, and more preferably 40 mass% or less. As described above, grains or grain powder such as whole grain flour, barley flour, brown rice flour, rye flour, oat flour, adlay flour, sorghum flour, buckwheat seed flour, amaranthus, quinoa, black sesame, white sesame, wheat bran, and rice bran are referred to as healthy ingredients. In addition, soybean flour, pea flour, wheat protein, insect powder, algal protein, soybean protein, rice protein, and the like are referred to as alternative proteins in the sense of proteins that substitute for proteins derived from livestock such as beef, pork, and chicken. Alternative proteins are considered to be environmentally friendly foods and the like, and their market is expanding. However, there is a problem that these healthy ingredients or baked confections containing alternative proteins in a high content exhibit a unique unpleasant flavor. In this embodiment, the method of the present invention is useful since the baking step of jetting the moist hot air described above can be performed to reduce a unique unpleasant flavor generated by baking dough highly containing a healthy ingredient and an alternative protein. The reason why the present invention can reduce unpleasant flavors is considered that the inside of the dough is heated at a high temperature all at once by a jet of moist hot air, thus blowing off (or deodorizing or reducing) unpleasant flavors such as grain odor, protein odor, and the earthy smell of insect food. In this embodiment, the time of the baking step can be set within the above-described range without limitation, but for example, is preferably 8 minutes or less.

Furthermore, in another embodiment, the present invention provides a method for producing a baked confection, the method including: the steps of: extruding and molding confectionery dough containing rice flour into a substantially rectangular flat plate shape or a rod shape; making a cut in the confectionery dough obtained by extruding and molding; and jetting wet hot air at 150 to 350°C, which is a mixture of heated air at 150 to 350°C and steam at 100 to 350°C, onto the confectionery dough cut in the above step for baking. In this embodiment, the proportion of the total amount of the rice flour to the total amount of the blending ingredients is not limited, and is preferably 40 mass% or more, more preferably 50 mass% or more, more preferably 60 mass% or more, more preferably 65 mass% or more, and still more preferably 70 mass% or more. In such an embodiment, the upper limit of the proportion of the total amount of the cereal flour and starch to the total amount of the blending ingredients is also not limited, but is, for example, preferably 95 mass% or less, more preferably 90 mass% or less, more preferably 85 mass% or less, and still more preferably 80 mass% or less. In the present embodiment, confectionery dough containing rice flour is extruded and molded into a substantially rectangular flat plate shape or a rod shape, and a cut is made in the confectionery dough obtained by extruding and molding to form the confectionery dough into a substantially rectangular flat plate shape or rod shape having a predetermined length. Here, the width between the cuts in the confectionery dough determines the length of the confectionery dough. In the present invention, "making a cut" is intended to streak or shave a part of the substantially rectangular flat plate-shaped or rod-shaped confectionery dough (part of which remains connected) along a plane perpendicular to the longitudinal direction of the dough, or to cut the dough (the dough is divided into two pieces by a cutting section). If a part of the dough is to remain connected, it is preferable to make streaks. The interval between the cuts is not limited, but is preferably 2 cm to 25 cm, more preferably 2 cm to 15 cm, more preferably 5 cm to 14 cm, and still more preferably 7 cm to 12 cm. In this embodiment, the substantially rectangular shape encompasses a shape in which some or all of four corners of the rectangular shape are rounded. In this embodiment, when the confectionery dough is formed into a rod shape, the confectionery dough preferably has a hollow rod shape. In an embodiment, the confectionery dough containing rice flour is extruded into a hollow rod shape, and a cut is made in the confectionery dough extruded and molded to obtain a hollow rod shape having a predetermined length. In the embodiment, the confectionery dough preferably further contains at least one material selected from the group consisting of starch, active gluten, maltose, trehalose, sugar alcohol, and vegetable fat and oil. When starch is used, for example, the starch is preferably blended in an amount of 15 parts by mass or less, more preferably 10 parts by mass or less with respect to 100 parts by mass of rice flour, although the content is not limited thereto. When maltose is used, for example, the maltose is preferably blended in an amount of 20 parts by mass or less, more preferably 10 parts by mass or less with respect to 100 parts by mass of rice flour, although the content is not limited thereto. When trehalose is used, for example, the trehalose is preferably blended in an amount of 20 parts by mass or less, more preferably 10 parts by mass or less with respect to 100 parts by mass of rice flour, although the content is not limited thereto. When vegetable fat and oil is used, for example, the vegetable fat and oil is preferably blended in an amount of 30 parts by mass or less, more preferably 20 parts by mass or less with respect to 100 parts by mass of rice flour, although the content is not limited thereto. In an embodiment of the method of the present invention, an oil pouring step of spraying a seasoning oil prepared by mixing a seasoning, a flavor, and the like with an oil such as vegetable fat and oil to the confectionery dough that has been baked may be performed after the baking step. When the oil pouring step is performed, the proportion of the seasoning oil used is not limited, but the proportion of the seasoning oil in parts by mass is preferably 5 to 40 parts by mass, more preferably 10 to 30 parts by mass, and still more preferably 15 to 20 parts by mass with respect to 100 parts by mass of the baked confectionery dough that has been baked.

Rice crackers, which are baked confections containing rice flour as a raw material, are very old confections and is still very popular today. In the conventional production of rice crackers, a kneading while steaming step of adding water to a raw material containing rice flour, steaming, and kneading has been required. In the kneading while steaming step, the starch in the raw material is gelatinized to increase the stickiness of dough and soften the dough. According to the method of the present invention, the gelatinization of starch in the dough can be improved by blowing moist hot air in a baking step to produce rice crackers without performing such a kneading while steaming step. Therefore, the present embodiment is very useful also in terms of energy saving, simplification of steps, flexibility of moldability, and the like. The temperature of the heated air in the baking step can be set in the same manner as described above, but in the present embodiment, the lower limit of the temperature of the moist hot air is 150°C or higher, preferably 160°C or higher, more preferably 180°C or higher, more preferably 185°C or higher, and still more preferably 195°C or higher. The upper limit of the temperature of the moist hot air can be set in the same manner as described above, but in the present embodiment, the temperature is preferably 350°C or lower, more preferably 300°C or lower, more preferably 280°C or lower, more preferably 260°C or lower, and still more preferably 235°C or lower. In the embodiment of rice crackers, the above temperature range is preferable from the viewpoint of forming a baked confection having a blister on the surface. The blister is a small irregularity generated by bubbles on the surface of the baked confection, which is also called "pear skin", "fish eye", "bubble pattern", or the like. The blistering of the product has the effect of differentiating it from other products in terms of appearance, providing a unique texture and improving the absorption of seasonings. However, it has not been possible to produce rice crackers having a blister on the surface. Therefore, the effect of causing a blister on the surface of rice crackers obtained by the present embodiment is not expected from the prior art. According to the present invention, the aforementioned moist hot air may be jetted onto the confectionery dough for baking to improve the degree of gelatinization and melting mouthfeel as compared with the baked confection obtained by the conventional baking step. Accordingly, the present invention provides a method for improving the degree of gelatinization of a baked confection, the method including a baking step of jetting moist hot air at 150 to 350°C, which is a mixture of heated air at 150 to 350°C and steam at 100 to 350°C, onto confectionery dough; and a method for improving melting mouthfeel of a baked confection, the method including a baking step of jetting moist hot air at 150 to 350°C, which is a mixture of heated air at 150 to 350°C and steam at 100 to 350°C, onto confectionery dough. Although the method of the present invention has been described above using various embodiments, the present invention is not limited to these embodiments.

### Baked confection

The present invention provides a baked confection. The shape of the baked confection is the same as described above, yet the rod-shaped baked confection or the like is preferable. In the embodiment of the rod-shaped baked confection, the length of the baked confection is not limited, and is, for example, preferably 2 cm to 25 cm, more preferably 2 cm to 15 cm, more preferably 4 cm to 14 cm, and still more preferably 6 cm to 12 cm. The width of the rod-shaped baked confection is also not limited, and is, for example, preferably 2 mm to 15 mm, more preferably 2 mm to 10 mm, and still more preferably 4 mm to 8 mm. In the present invention, the width of the rod-shaped baked confection means a diameter of a circle in the case of the rod-shaped baked confection having a circular cross section and means the longest width of the cross section in the case of other cross-sectional shapes.

In an embodiment, the present invention is particularly preferable because a rod-shaped rice cracker can be provided. In this embodiment, the shape of the baked confection is the same as described above, and the rod-shaped baked confection or the like is preferable. In a preferred embodiment, the rice cracker of the present invention has a degree of gelatinization of, for example, 70% or more, preferably 80% or more. The degree of gelatinization can be measured according to a β-amylase and pullulanase method (BAP method), a second glucoamylase method, a glucoamylase method, or a diastase method. Since it is difficult to form a rod-shaped rice cracker through kneading while steaming, there has been no report on rice crackers having a high degree of gelatinization of 70% or more. In this embodiment, the baked confection of the present invention may have a blister on a surface thereof.

Such a baked confection of the present invention is preferable because it provides high melting mouthfeel. In addition, since the baked confection of the present invention can achieve the high melting mouthfeel without using an emulsifier such as monoglycerin or sodium stearoyl lactate, which is preferable from the viewpoint of reducing the manufacturing cost and meeting the recent trend of reducing food additives.

The baked confection of the present invention can be produced, for example, using the method of the present invention described above. Unless indicated otherwise, the types, amounts, and the like of the raw materials used in the embodiments of such baked confections can be appropriately adopted as those shown in the embodiments of the method described above.

Hereinafter, the present invention will be described in detail using more specific embodiments in Examples and Comparative Examples, but the present invention is not limited to such Examples.

### Examples

In the following Examples, a baking step of jetting moist hot air, which was a mixture of heated air and steam, was performed using a jet oven FGJOASS (Fujimak Corporation). In addition, as a comparative control, a conventional baking step was performed using a batch oven (shelf-type oven, manufactured by Bakers Production). In the table, the numbers of the amounts of the raw materials used indicate parts by mass.

### Example 1

Raw materials (blending ingredients + water) listed in Table 1 below were mixed, then molded into a sheet having a thickness of 2.5 mm, punched with a circular mold having a diameter of 45 mm, arranged on an iron plate, and baked in each oven to prepare soft biscuits. At that time, in the jet oven of the test group, moist hot air (170°C), which was a mixture of heated air (170°C) and steam (steam level: 2, temperature: 100°C or higher, 30 g/1 cubic meter of moist hot air), was jetted from above and below in a direction perpendicular to the plane of the iron plate at a wind speed level 2 (8 m/s), and baking was performed for 5 minutes and 30 seconds. In the batch oven of the control group, baking was performed at an upper and lower burner setting of 180°C for about 12 minutes.

**Table 1**

| Raw material name | Formulation |
|---|---|
| Weak flour | 125.00 |
| Shortening | 40.00 |
| Ammonium hydrogen carbonate | 0.80 |
| Sodium bicarbonate | 0.80 |
| Salt | 0.50 |
| Powdered sugar | 35.00 |
| Total | 202.10 |
| Water | 13.5 |

The resulting soft biscuits were subjected to sensory testing by three panelists skilled in food field inspection. Evaluation criteria are as follows:
Good: Melting mouthfeel is good
Acceptable: Between good and poor
Poor: Poor melting mouthfeel
The results are shown in Table 2 below.

**Table 2**

| | Evaluation | Comment |
|---|---|---|
| Test group | Good | Good melting mouthfeel |
| Control group | Acceptable | Slightly powdery texture and poor melting mouthfeel |

The product baked in the test group clearly improved swelling and degree of gelatinization as compared with that in the target group. Accordingly, it was found that the melting mouthfeel was clearly improved.

### Example 2

Raw materials (blending ingredients + water) listed in Table 3 below were mixed, and then rolled into a sheet having a thickness of **3.3** mm with a roller. Thereafter, the resulting sheet was cut into a noodle shape having a width of **3.5 mm,** immersed in a 6% trisodium phosphate aqueous solution at normal temperature for 2 to 4 seconds, and arranged on a light mesh. In the jet oven of the test group, moist hot air (230°C), which was a mixture of heated air (230°C) and steam (steam level **2,** 100°C or higher, 30 g/1 cubic meter of moist hot air), was jetted from above and below in a direction perpendicular to the light mesh at a wind speed level 2 (8 m/s), and baking was performed for 4 minutes and 30 seconds to obtain a rod-shaped baked confection. In the batch oven of the target group, baking was performed at an upper and lower burner setting of 200°C for about 12 minutes.

**Table 3**

| Raw material name | Formulation |
|---|---|
| Barley flour | 250.00 |
| Cold water gelatinized starch | 50.00 |
| Active gluten | 50.00 |
| Emulsifier | 0.49 |
| Sugar | 35.00 |
| Salt | 2.42 |
| Enzyme | 0.02 |
| Yeast | 9.40 |
| Unsalted butter | 32.60 |
| Total | 429.93 |
| Water | 463.3 |

The resulting rod-shaped baked confections were subjected to sensory testing by three panelists skilled in food field inspection. Evaluation criteria are as follows:
Good: Melting mouthfeel is good
Acceptable: Between good and poor
Poor: Poor melting mouthfeel

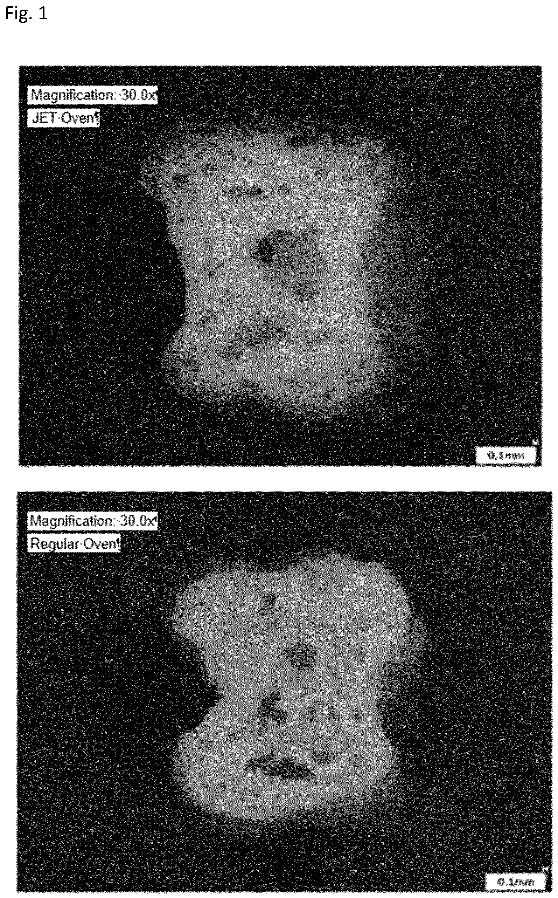

The results are shown in Table 4 below. Fig. 1 shows photographs of cross sections of confectionery of a test group and a control group.

**Table 4**

| | Evaluation | Comment |
|---|---|---|
| Test group | Good | Favorable swelling and light texture |
| Control group | Poor | Insufficient swelling. Stuck texture |

Similarly to Example 1, the product baked in the test group clearly improved swelling and degree of gelatinization as compared with that in the target group. Accordingly, it was found that the melting mouthfeel was improved.

### Example 3

Raw materials (blending ingredients + water) listed in Table 5 below were mixed, then molded into a sheet having a thickness of 2.5 mm, punched with a circular mold having a diameter of 45 mm, arranged on a light mesh, and baked in each oven to prepare soft biscuits. At that time, in the jet oven of the test group, moist hot air, which was a mixture of heated air (170°C) and steam (steam level 2, 100°C or higher, 30 g/1 cubic meter of moist hot air), was jetted from above and below in a direction perpendicular to the light mesh at a wind speed level 2 (8 m/s), and baking was performed for 5 minutes and 30 seconds. In the batch oven of the target group, baking was performed at an upper and lower burner setting of 180°C for about 12 minutes.

**Table 5**

| Raw material name | Formulation |
|---|---|
| Weak flour | 100.00 |
| Shortening | 40.00 |
| Ammonium hydrogen carbonate | 0.80 |
| Sodium bicarbonate | 0.80 |
| Salt | 0.50 |
| Cricket powder | 70.00 |
| Powdered sugar | 20.00 |
| Total | 232.10 |
| Water | 20.00 |

The resulting soft biscuits were subjected to sensory testing by three panelists skilled in food field inspection. Evaluation criteria are as follows:
Good: Weak unpleasant flavor derived from alternative protein
Acceptable: Between good and poor
Poor: Strong unpleasant flavor derived from alternative protein

The results are shown in Table 6 below.

**Table 6**

| | Evaluation | Comment |
|---|---|---|
| Test group | Good | Weak unpleasant flavor |
| Control group | Poor | Strong unpleasant flavor |

Compared to the target group, the baked product in the test group clearly showed a reduction in the unique unpleasant flavor. In addition, regarding the texture, as in Examples 1 and 2, the baked product in the test group clearly showed improved swelling and higher degree of gelatinization as compared with to those in the target group. Accordingly, it was found that the melting mouthfeel was improved.

### Example 4

After raw materials (blending ingredients + water) listed in Table 7 below were mixed, the mixed dough was then extruded into a hollow rod (outer diameter: 6 mm, inner diameter: 2 mm), and cut at intervals of about 12 cm. The resulting dough was arranged on a light mesh and baked in each oven to prepare rod-shaped rice crackers. At that time, in the jet oven of the test group, moist hot air (170°C to 215°C), which was a mixture of heated air (170°C to 215°C) and steam (steam level 2, 100°C or higher, 30 g/1 cubic meter of moist hot air), was jetted from above and below in a direction perpendicular to the light mesh at a wind speed level 2 (8 m/s), and baking was performed for 5 minutes and 30 seconds to 7 minutes and 10 seconds (Fig. 8). In the batch oven of the control group, baking was performed at an upper and lower burner setting of 200°C for about 15 minutes.

**Table 7**

| Raw material name | Formulation |
|---|---|
| Rice flour produced in Niigata Prefecture | 344.0 |
| Matsunorin M22 | 15.0 |
| Maltose | 20.0 |
| Trehalose | 20.0 |
| Salt | 2.8 |
| Amount of water added | 166.0 |
| Shortening | 60.0 |
| Lecithin | 1.5 |
| Total of raw materials other than water | 463.3 |

**Table 8**

| Conditions of heated air and steam in each test group | | |
|---|---|---|
| | Temperature of moist hot air | Baking time |
| Test group A | 180°C | 5 mins |
| Test group B | 215°C | 5 mins 30 secs |
| Test group C | 200°C | 6 mins |
| Test group D | 190°C | 6 mins 20 secs |
| Test group E | 170°C | 7 mins 10 secs |

The resulting rice crackers were subjected to sensory testing by three panelists skilled in food field inspection. Evaluation criteria are as follows:
Good: Crunchy and good melting mouthfeel
Acceptable: Between good and poor
Poor: Not crunchy and bad melting mouthfeel

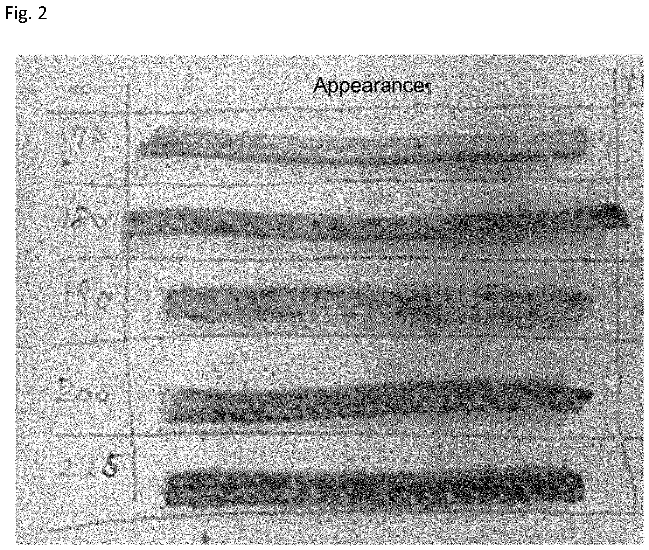

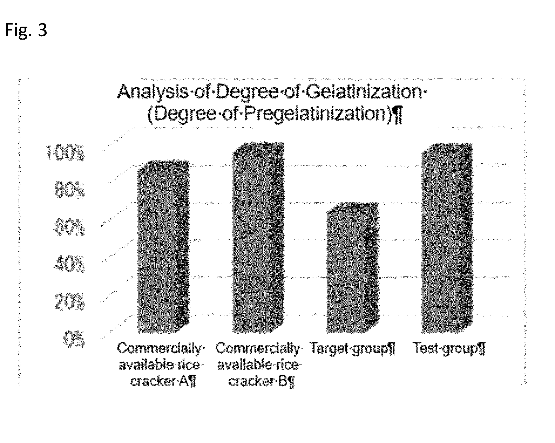

In addition, the presence or absence of a blister was also evaluated. The results are shown in Table 9 below. Furthermore, Fig. 2 shows a photograph of the appearance of stick-shaped rice crackers of each test group. In addition, the degree of gelatinization (degree of pregelatinization) of rice crackers in the control group and the test group B was measured according to a β-amylase pullulanase method (BAP method). The degree of gelatinization (degree of pregelatinization) of commercially available rice crackers (rice crackers obtained through a kneading while steaming step with a shape other than a rod shape) was also measured. Fig. 3 shows the results.

**Table 9**

| | Evaluation | Comment |
|---|---|---|
| 170°C (test group E) | Acceptable | No burning blister |
| 180°C (test group A) | Good | No burning blister |
| 190°C (test group D) | Good | Slightly blistered |
| 200°C (test group C) | Good | Blistered |
| 215°C (test group B) | Good | Blistered |
| Control group | Poor | No burning blister |

In each of the test groups, it was possible to obtain stick-shaped rice crackers having a high degree of gelatinization (α-degree) without undergoing the kneading while steaming step by baking using moist hot air. In addition, in each test group, rice crackers having a crunchy texture with a good melting mouthfeel was eventually obtained. Furthermore, rice crackers having a stick shape and an appearance with a blister was obtained under predetermined blending and baking conditions.

### Example 5

After raw materials (blending ingredients + water) listed in Table 10 below were mixed, the mixed dough was then extruded into a hollow rod (outer diameter: 6 mm, inner diameter: 2 mm), and cut at intervals of about 10 cm. The resulting dough was arranged on a light mesh and baked in each oven to prepare rod-shaped baked confections. At that time, in the jet oven of the test group, moist hot air (200°C), which was a mixture of heated air (200°C) and steam (steam level 2, 100°C or higher, 30 g/1 cubic meter of moist hot air), was jetted from above and below in a direction perpendicular to the light mesh at a wind speed level 2 (8 m/s), and baking was performed for 4 minutes and 10 seconds. In the batch oven of the control group, baking was performed at an upper burner setting of 200°C and a lower burner setting of 165°C for about 15 minutes.

**Table 10**

| Raw material name | Formulation |
|---|---|
| Barley flour | 300.0 |
| Cold water gelatinized starch | 30.0 |
| Gluten | 20.0 |
| Maltose | 15.0 |
| Trehalose | 15.0 |
| Salt | 2.8 |
| Amount of water added | 255.0 |
| Vegetable fat and oil | 40.0 |
| Emulsifier | 1.5 |
| Total of raw materials other than water | 424.3 |

The resulting rod-shaped baked confections were subjected to sensory testing by 27 panelists skilled in food field inspection. The evaluation items were "grain odor", "sourness", and "off-flavor". A case equivalent to the control group was evaluated as "0", a case slightly weaker than the control was evaluated as "1", a case weaker than the control was evaluated as "2", a case slightly stronger than the control was evaluated as "-1", and a case stronger than the control was evaluated as "-2".

As a result, the superiority could be confirmed with a significant difference.

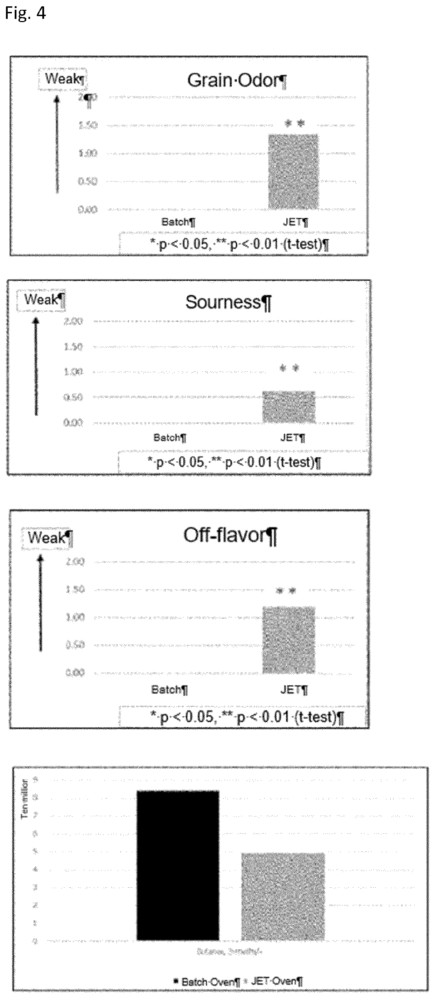

In the analysis, a decrease in 3-methylbutanal, which is considered a remarkable aroma component of barley, was also confirmed. Fig. 4 shows the results. As shown in Fig. 4, the moist hot air was impinged on the dough from the upper and lower sides to bake the dough, resulting in a baked confection with reduced unpleasant odor derived from grains such as minor grains.

### Example 6

After raw materials (blending ingredients + water) listed in Table 11 below were mixed, the mixed dough was rolled to about 3 mm and then punched out into a predetermined mold, which has a substantially fan-shaped planar shape (center angle: 60°, radius: about 30 mm, thickness: about 3 mm) with three circular holes (diameter 5 mm × 1, diameter 4 mm × 2) formed per piece. The resulting dough was arranged on an iron plate and baked in each oven to prepare baked confections. At that time, in the jet oven of the test group, moist hot air (200°C), which was a mixture of heated air (200°C) and steam (steam level: **2,** temperature: 100°C or higher, 30 g/1 cubic meter of moist hot air), was jetted from above and below in a direction perpendicular to the iron plate at a wind speed level 2 (8 m/s), and baking was performed for 3 minutes and 30 seconds. In the batch oven of the control group, baking was performed at an upper burner setting of 200°C and a lower burner setting of 200°C for about 9 minutes.

**Table 11**

| Raw material name | Formulation |
|---|---|
| Processed starch | 12.5 |
| Phosphated distarch phosphate | 61.0 |
| Cold water gelatinized starch | 7.5 |
| Trehalose | 35.0 |
| Cheddar cheese | 87.5 |
| Camembert cheese powder | 20.0 |
| Sodium caseinate | 5.0 |
| Seasoning | 1.25 |
| Salt | 0.5 |
| Amount of water added | 10.0 |
| Total of raw materials other than adding water | 230.25 |

The resulting baked confection was subjected to sensory testing by 28 panelists skilled in food field inspection. The evaluation items were "melting mouthfeel", "powdery texture", and "preference".

O In terms of melting mouthfeel, a case equivalent to the control group was evaluated as "0", a case slightly better than the control was evaluated as "1", a case better than the control was evaluated as "2", a case slightly worse than the control was evaluated as "-1", and a case worse than the control was evaluated as "-2".

O In terms of powdery texture, a case equivalent to the control was evaluated as "0", a case slightly weaker than the control was evaluated as "1", a case weaker than the control was evaluated as "2", a case slightly stronger than the control was evaluated as "-1", and a case stronger than the control was evaluated as "-2".

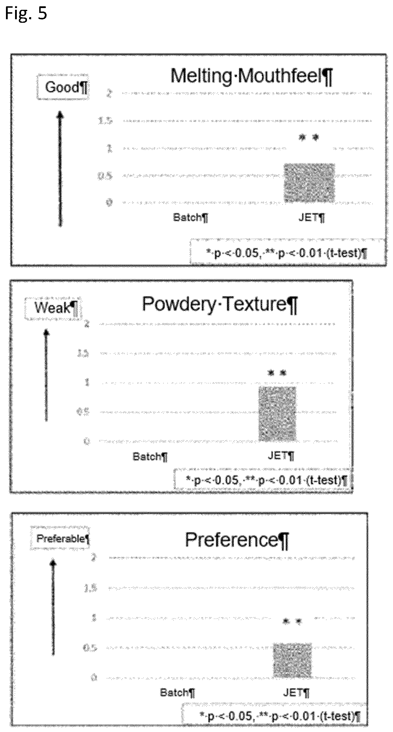

O In terms of preference, a case equivalent to the control was evaluated as "0", a case slightly favorable than the control was evaluated as "1", a case more favorable than the control was evaluated as "2", a case slightly unfavorable than the control was evaluated as "-1", and a case unfavorable than the control was evaluated as "-2". Fig. 5 shows the respective results. As shown in Fig. 5, the moist hot air was impinged on the dough from the upper and lower sides to bake the dough, resulting in a baked confection with a high preference level, in which melting mouthfeel is good and powdery texture is reduced even in the formulation containing a lot of protein and dietary fiber.

### Example 7

Raw materials (blending ingredients + water) described in Table 12 below were mixed, and the mixed dough was then formed into a rope having a thickness of about 3.6 mm and a width of 7.2 mm, and the surface of the rope was subjected to an alkali treatment with a 3% solution of trisodium phosphate to form a rod having a length of 100 mm. The resulting dough was arranged on a light mesh and baked in each oven to prepare rod-shaped baked confections. At that time, in the jet oven of the test group, moist hot air (175°C), which was a mixture of heated air (175°C) and steam (steam level 1, 100°C or higher, 15 g/1 cubic meter of moist hot air), was jetted from above and below in a direction perpendicular to the light mesh at a wind speed level 2 (8 m/s), and baking was performed for 5 minutes and 50 seconds. In the batch oven of the control group, baking was performed at an upper burner setting of 230°C and a lower burner setting of 200°C for 6 minutes, and then baking was performed at an upper burner setting of 180°C and a lower burner setting of 160°C for 7 minutes. Therefore, baking was performed for 13 minutes in total.

**Table 12**

| Raw material name | Formulation |
|---|---|
| Wheat flour | 242.00 |
| Rice flour | 88.00 |
| Sugar | 22.44 |
| Margarine | 28.60 |
| Yeast | 6.60 |
| Salt | 2.20 |
| Emulsifier | 0.44 |
| Enzyme | 0.02 |
| Adding water | 96.0 |
| Total of raw materials other than adding water | 390.30 |

The resulting baked confection was subjected to sensory testing by 28 panelists skilled in food field inspection. The evaluation items were "melting mouthfeel", "texture", and "preference".

O In terms of melting mouthfeel, a case equivalent to the control group was evaluated as "0", a case slightly better than the control was evaluated as "1", a case better than the control was evaluated as "2", a case slightly worse than the control was evaluated as "-1", and a case worse than the control was evaluated as "-2".

O In terms of texture, a case equivalent to the control was evaluated as "0", a case slightly better than the control was evaluated as "1", a case better than the control was evaluated as "2", a case slightly worse than the control was evaluated as "-1", and a case worse than the control was evaluated as "-2".

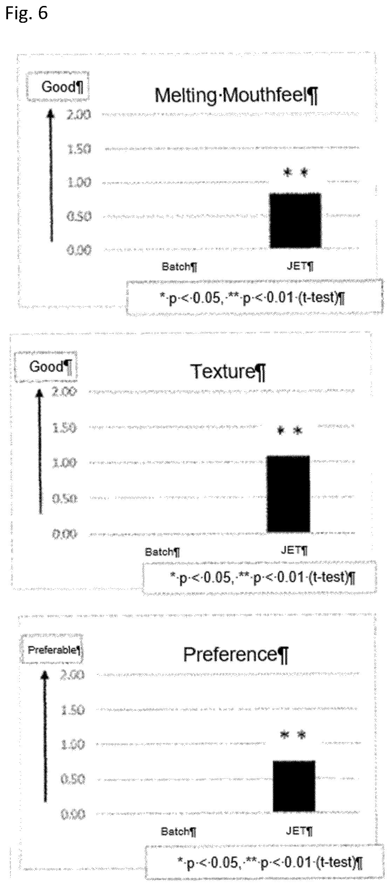

O In terms of preference, a case equivalent to the control was evaluated as "0", a case slightly favorable than the control was evaluated as "1", a case more favorable than the control was evaluated as "2", a case slightly unfavorable than the control was evaluated as "-1", and a case unfavorable than the control was evaluated as "-2". Fig. 6 shows the respective results. As shown in Fig. 6, the moist hot air was impinged on the dough from the upper and lower sides to bake the dough, resulting in a baked confection with a high preference level, in which melting mouthfeel and texture are good even in the formulation using rice flour and wheat flour in combination.

## Claims

1. A method for producing a baked confection, the method comprising a baking step of jetting moist hot air at 150 to 350°C, which is a mixture of heated air at 150 to 350°C and steam at 100 to 350°C, onto confectionery dough.

2. The method according to claim **1,** wherein in the baking step, the moist hot air is jetted at 1 to 13 m/s.

3. The method according to claim **1,** wherein the moist hot air is jetted in the baking step for 1 to 10 minutes.

4. The method according to claim 1, wherein the confectionery dough contains 20 to 100 mass% of at least one grain or grain powder selected from the group consisting of whole grain flour, barley flour, brown rice flour, rye flour, oat flour, adlay flour, sorghum flour, buckwheat seed flour, amaranthus, quinoa, black sesame, white sesame, wheat bran, and rice bran in blending ingredients.

5. The method according to claim 1, wherein the confectionery dough contains 5 to 50 mass% of at least one selected from the group consisting of whole grain flour, barley flour, brown rice flour, rye flour, oat flour, adlay flour, sorghum flour, buckwheat seed flour, amaranthus, quinoa, black sesame, white sesame, wheat bran, rice bran, soybean flour, pea flour, wheat protein, insect powder, algal protein, cheese, cheese powder, soybean protein, rice protein, inulin, indigestible dextrin, and phosphated distarch phosphate in blending ingredients.

6. The method according to claim **1,** wherein
the confectionery dough contains rice flour,
the method further comprising the steps of:
extruding and molding the confectionery dough into a substantially rectangular flat plate shape or a rod shape before the baking step; and
making a cut in the confectionery dough obtained by extruding and molding.

7. The method according to claim 6, wherein in the step of making a cut in the confectionery dough, an interval between cuts is 2 to 25 cm.

8. The method according to claim 6, wherein the confectionery dough further contains at least one material selected from the group consisting of starch, active gluten, maltose, trehalose, sugar alcohol, and vegetable fat and oil, and a content of the material is 15 parts by mass or less of cold water gelatinized starch, 20 parts by mass or less of maltose, 20 parts by mass or less of trehalose, and 30 parts by mass or less of vegetable fat and oil with respect to 100 parts by mass of rice flour.

9. A baked confection obtained by the method according to any one of claims 1 to 8.

10. The baked confection according to claim 9, which is a rod-shaped baked confection.

11. A rod-shaped rice cracker having a degree of gelatinization of 70% or more.

12. The rod-shaped rice cracker according to claim 11, which has a blister on a surface thereof.

13. The rod-shaped rice cracker according to claim 11 or 12, which is obtained by the method according to any one of claims 1 to 8.

14. The rod-shaped rice cracker according to claim 11 or 12, wherein dough containing rice flour and at least one material selected from the group consisting of starch, active gluten, maltose, trehalose, sugar alcohol, and vegetable fat and oil is baked by jetting moist hot air at 150 to 350°C, which is a mixture of heated air at 150 to 350°C and steam at 100 to 350°C, resulting in gelatinization and/or surface blistering.
